# EUROPEAN PATENT APPLICATION

(11) **EP 2 889 816 A1**
(43) Date of publication of application: **01.07.2015**
(21) Application number: 13199833.8
(22) Date of filing: 30.12.2013
(51) Int. Cl.: G06Q 10/06

(54) **Systems and methods for providing a configurable workflow application**

(71) Applicant: HDS Group, 92000 Nanterre (FR)
(72) Inventor: Stoyanov, Anton, 92000 Nanterre (FR)
(74) Representative: Intès, Didier Gérard André

(57) **Abstract**

A method for providing a customizable workflow process is provided. The method includes receiving, via a network, a request from a user, wherein the request comprises at least an entity ID associated with the user and an application ID associated with the workflow process, obtaining, by a processor, a step related to the workflow process from a database, based on the request, wherein the step comprises at least a step count identifier and step information, executing, by the processor, the step based on the step information to generate step results, determining, by the processor, based on the step results and an incremental step counter, a subsequent step to be executed in the workflow process, and storing, by the processor, the results of the workflow process.

## Description

### Field of the Disclosure

The disclosure relates to workflow technology, and more particularly to configuring and providing a plurality of customizable, multitenant workflow applications.

### Background of the Disclosure

Generally, workflow management relates to computer based systems that manage and define a series of tasks within an organization, with the goal of producing a final outcome or outcomes. For example, a company may purchase stationary for use in day to day operations, but such a purchase may be subject of a hierarchical approval process. For purposes of, for example, future audits, it is generally desirable to maintain a record of the hierarchical approval process and to facilitate generation of a final report related thereto.

Workflow management systems allow a user to define different workflows for different types of jobs or processes. For example, in a manufacturing setting, a design document may be automatically routed from a designer to a technical director to the production engineer. At each stage in this exemplary workflow, one individual or group is responsible for a specific task.

Once the task is complete, workflow software ensures that the individuals responsible for the next task are notified and receive the data they need to execute their stage of the process. Workflow management systems can also automate redundant tasks and ensure that uncompleted tasks are followed up.

Prior workflow systems have been developed that allow a user to create workflow processes graphically by way of a logical diagram generated using drawing tools. The user may select various tasks and add such tasks to the workflow by, for example, dragging and dropping the associated task shape into the domain of the workflow process. The user may then use connectors to direct the "flow" of the workflow process between these task shapes.

Once the user has completed preparing the workflow process diagram, the diagram may be converted into code by the system and compiled into a custom workflow process.

Alternatively, in other available workflow systems, a user may program the workflow process using meta language.

Software as a service SaaS, primarily an extension of the Application service provider (ASP) model, has been steadily growing as a market force. Because SaaS utilizes the Cloud and, physical need for indirect distribution is eliminated because it is not distributed physically and deployment becomes almost instantaneous. This yields benefits with regard to cost savings for companies who no longer need to maintain costly software products, but can introduce difficulties with regard to implementation of certain types of applications, such as workflow applications.

It is accordingly a primary object of the disclosure to provide systems and methods for overcoming one or more deficiencies in the prior art.

### SUMMARY OF THE DISCLOSURE

According to embodiments of the present invention, a method for providing a customizable workflow process is provided. The method includes receiving, via a network, a request from a user, wherein the request comprises at least an entity ID associated with the user and an application ID associated with the workflow process, obtaining, by a processor, a step related to the workflow process from a database, based on the request, wherein the step comprises at least a step count identifier and step information, executing, by the processor, the step based on the step information to generate step results, determining, by the processor, based on the step results and an incremental step counter, a subsequent step to be executed in the workflow process, and storing, by the processor, the results of the workflow process.

By providing such a method, the arduous task of converting a workflow process to code and recompiling the workflow code each time a workflow process is created or changed can be eliminated. Further, such a method enables a continuously customizable workflow to be provided via a multi-tenant environment, for example the internet and/or the Cloud, without the need to access the underlying executables and without compromising security between tenants. Customization can be carried-out by an administrator that has little to no IT skills and/or training. This method allows different tenants to have different workflow processes for similar applications.

The method may be optionally configured to operate in a cloud computing environment. Indeed, customizable, multitenant workflow applications according to the present disclosure do not involve recompilation following customization and are highly scalable.

The database may be organized in the form of a matrix such that step information, flow variables, user information, etc. are stored in the matrix.

User information may include information related to the user as well as information related to the user's direct supervisor, for example. In addition, user information may include data related to the user's access level and approval abilities/limits. For example, a user may be enabled to approve only transaction less than or greater than a predetermined value.

The step may further comprise execution information and the execution information may indicate whether or not the step should be executed. Such execution information may be linked to user permissions, approval abilities/limits.

The method may further include determining an alternative subsequent step based on the incremental step counter and the step information when the execution information indicates that the step is not to be executed.

The executing can include notifying a second user that the second user's intervention is requested. The second user may be enabled to respond to the user with a question, give his/her approval, decline to approve, review a document, etc.

According to embodiments of the disclosure, the method may further include generating a document detailing the results of the workflow process, and outputting the document in human readable format. For example, the document may be a portable document format (PDF) document detailing the results of each step of the work flow for purposes of compliance auditing. In addition, an approved purchase order, or other desirable document may be output for purposes of completing a purchase.

The method may also include defining the workflow process, which may include creating a step comprising step information, incrementing the incremental step counter associated with the workflow process, and storing the step counter and the step including the step information in the database.

This may allow a user to set up a workflow without complicated drawing tools and without recompiling workflow instructions.

According to some embodiments of the disclosure, it may be possible to import a spreadsheet (e.g., an Excel spreadsheet) containing workflow process step data, this data being used to fill the matrix for the workflow process.

According to some embodiments, the step is selected from one of a notification, a decision request, an information request, and a document request and the step information comprises at least one of an affected user, a deadline, a reminder frequency, a reminder delay, and exit instructions.

The method may further include evaluating one or more flow variables stored in the database, and modifying the determination of the subsequent step based on the evaluation. Such modifying can include branching to a predefined sub-stream of the workflow process. A step entry may be created for each combination of flow variables to enable branching to any desired sub-stream.

According to embodiments of the disclosure the method may further include incrementing the incremental step counter after execution of each step of the workflow process and/or modifying the incremental step counter based on the step results.

According to further embodiments of the disclosure, a computer system for providing a customizable workflow process is provided. The computer system may include a receiving module configured to receive a request for workflow information via a network, wherein the request comprises at least an entity ID associated with the user and an application ID associated with the workflow process, a retrieval module configured to obtain a step related to the workflow process from a database, based on the request, wherein the step comprises at least a step count identifier and step information, a processing module configured to execute the step based on the step information, an incremental step counter configured to track a position in the workflow process corresponding to the step count identifier, and a generating module configured to receive information from the processing module and to generate and store the step results, wherein the processing module is further configured to determine a subsequent step to be executed in the workflow process based on the step results and wherein the generating module is further configured to generate workflow process results based on a plurality of step results.

By providing such a computer system, the task of converting a workflow process to code and recompiling the workflow code each time a workflow process is created or changed can be eliminated. Further, such a method enables a continuously customizable workflow to be provided via a multi-tenant environment, such as the internet and/or the cloud without the need to access the underlying executables and without compromising security between tenants.

The network may comprise the internet.

The processing module may be further configured to determine, based on the execution information, whether or not the step should be executed and the processing module may be further configured to determine an alternative subsequent step when the step is not to be executed based on the incremental step counter and the step information.

According to some embodiments, the executing includes notifying a second user that the second user's intervention is requested.

The generating module can be further configured to generate a document detailing the results of the workflow process and output the document in human readable format.

According to embodiments of the disclosure, the computer system may further comprise a defining module configured for creating a step comprising step information, incrementing a step counter associated with the work flow process; and passing information to the storage module to enable storing the step counter and the step including the step information in the database.

Such a configuration may enable a user to set up a workflow without complicated drawing tools and without recompiling workflow instructions.

The step may be selected from one of a notification, a decision request, an information request, a change request, and a document request and the step information may comprise at least one of an affected user, a deadline, a reminder frequency, and exit instructions.

According to some embodiments of the disclosure, the processing module may be further configured to evaluate one or more flow variables stored in the database, and to modify the determination of the subsequent step based on the evaluation. The modification may include following a predefined sub-stream of the workflow process.

According to still further embodiments of the disclosure, a non-transitory computer readable medium containing instructions that when executed by a processor cause the processor to perform the method described above is provided.

According to yet further embodiments of the disclosure, a non-transitory computer readable medium containing instructions that when executed by a processor cause the processor to implement the modules described above is provided.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, serve to explain the principles thereof.

### BRIEF DESCRIPTION OF THE DRAWINGS

Figure 1 is a block diagram illustrating an exemplary architecture associated with a client device consistent with embodiments of the present disclosure;
Figure 2A is a block diagram illustrating an exemplary architecture associated with a server device consistent with embodiments of the present disclosure;
Figure 2B is an exemplary configuration screen highlighting an exemplary data structure associated with a customized workflow step that may be stored in a database;
Figure 2C is an exemplary portion of a matrix table showing several exemplary steps comprising a workflow;
Figure 3 is an illustration of an exemplary logical architecture depicting software modules according to embodiments of the present disclosure;
Figure 4 is a flowchart depicting an exemplary customized workflow process according to embodiments of the present disclosure;
Figure 5 is a high level flow chart depicting an exemplary method according to embodiments of the present disclosure;
Figure 6 is a lower level representation of the execution step of the flow chart depicted at Figure 5;
Figure 7 is a low level representation of the execute task step of the flow chart depicted at Figure 6;
Figure 8A is an illustration of an exemplary user interface (GUI) for providing workflow information to a user, according to embodiments of the present disclosure;
Figures 8B is an exemplary step detail GUI related to workflow task execution; and
Figure 8C is another exemplary portion of the step detail GUI shown at Figure 8B.

### MORE DETAILED DESCRIPTION

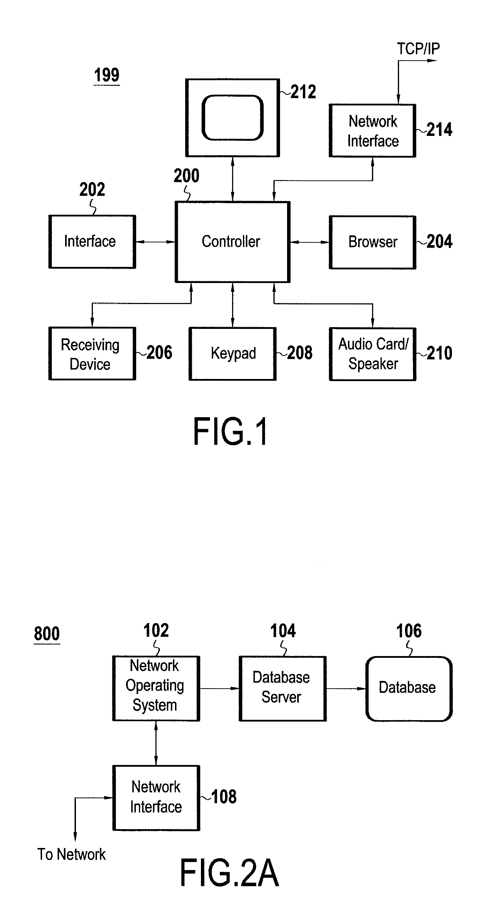

An exemplary computer system consistent with the present disclosure is now described with reference to FIGS. 1 and 2A. Figure 1 is a block diagram of an exemplary client device 199 consistent with embodiments of the present disclosure. While elements of FIG. 1 are illustrated to highlight components of exemplary client device 199, one of ordinary skill in the art will recognize that client device 199 may be of any suitable size with more or fewer components as desired. Further, while the components of FIG. 1 are shown as logical devices, one skilled in the art would readily understand that each can be associated with a respective physical device. For example, as described in the foregoing description, client device 199 may comprise a personal computer (e.g., a laptop or desktop computer), a mobile device (e.g., a mobile phone, a tablet computer, a reading appliance, etc.), a dedicated calendar device, an interactive picture frame, or any suitable device providing desirable functionality based on embodiments of the present disclosure.

Client device 199 may include any suitable operating system, for example, Windows, Mac OS, iOS, Android, LINUX, UNIX, etc. Such operating systems may be proprietary to a manufacturer of client device 199, proprietary in general, open source, or any combination thereof.

It will be understood by those skilled in the art that communication via a network (e.g., with the Cloud) may take place using a single or a combination of protocols and technologies. For example, communication may take place over Hypertext Transfer Protocol (HTTP) and Transmission Control Protocol/Internet Protocol (TCP/IP) for transport and Hypertext Markup Language (HTML), PHP, JavaScript, and PHP for presenting information to users. Further, where available, communication may take place using any combination of additional transport layers including, for example, Global System for Mobile Communications (GSM) and/or Universal Mobile Telecommunications System (UMTS) alone or in combination with other protocols for transmitting information.

Client device 199 may be configured to receive information and/or requests from users, display information to users, and communicate with one or more devices via, for example, a wired and/or a wireless network. As shown, client device 199 may include a controller 200, a storage interface 202, a browser 204, a receiving module 206, a keypad 201, an audio card/speaker module 210, a video display 212 (e.g., including touch screen capability), and a network interface 214.

Controller 200 may include a processor and/or memory. Storage interface 202 may provide access to and/or may include one or more software applications stored in local storage which may be configured for displaying graphics to provide information to a user.

For example, instructions associated with browser 204 may be stored or otherwise accessible via storage interface 202. Browser 204 may include any suitable software application, such as, for example, Microsoft Internet Explorer, Mozilla Firefox, Google Chrome, Opera, Apple Safari, or any other suitable software for issuing HTTP requests and receiving HTTP responses over network 100. For example, browser 204 may be configured to request a specific web page such as, for example, a company's workflow application selection website. Browser 204 may also read HTML codes embedded in the web pages received from server 100 to determine how, where, and in what colors and fonts the elements on the web pages may be displayed.

Receiving device 206 may be combined with or used in combination with keypad 201 and network interface 214 for purposes of receiving information from a user or a network, among others. Receiving device 206 may comprise both hardware complements as well as software modules (e.g., receiving module 305) for enabling receipt of information, for example workflow process step information.

Keypad 201 may comprise a conventional alphanumeric or numeric key entry device. Keypad 201 may, for example, permit a user to enter, for example information related to workflow processes and users associated therewith. According to some embodiments, a keypad may not be necessary because a user may be able to input information using touch screen capabilities of video display 212, voice recognition software, or other suitable entry methods.

Audio card/speaker module 210 may comprise a conventional audio card, amplifier, and speaker for presenting audio.

Display device 212 may comprise a conventional video display (e.g., CRT, LCD, LED, etc.) for displaying video graphics and receiving (e.g. touch-screen functionality) user input. According to some embodiments, touch-screen functionality may not be present, and user inputs may be made through keypad 201.

Network interface 214 may comprise any suitable interface for transmitting and receiving information over a network. For example network interface 214 may comprise a wireless interface (e.g., WiFi 102.11 (x), GSM, etc.) and/or a wired interface (e.g., USB, RJ45, etc.) Network interface 214 may be configured to transmit requests from, for example, browser 204 and to receive responses via a network (e.g., the Internet). For example event information, service information, and other desirable data (e.g. user interface data) may be transmitted via network between a client device and a server device.

Although not shown, user client device 199 may include a printer device to print information (e.g., approved documents, compliance reports, etc). Moreover, user client device 199 may also include other input devices, such as a pointing device (e.g., trackball or mouse). In addition, user client device 199 may also include head phones, for example, to listen to audio, and text-to-speech and/or speech-to-text conversion software, respectively, to listening to and/or to speak information.

FIG. 2A is a block diagram of an exemplary server 100 consistent with the present invention. As shown, server 100 may include network operating system 102, a database server 104, one or more databases 106, and a network interface 101. Network operating system 102 may include any conventional or future developed operating system (e.g., DOS, Linux, Windows, VMS, VAX, BeOS, Solaris, OS/2, Macintosh, UNIX, etc.). Similar to network interface 214, which was described above in connection with FIG. 1, network interface 201 may transmit information to and receive information from client devices 199 via any suitable network protocol or combination of protocols.

Database server 104 may provide access to and maintain database 106. In addition, database server 104 may retrieve from database 106 workflow information, step information, user information, and other information responding to requests from the client devices 199. Furthermore, the database server 104 may include any suitable database management software, for example, SQL Server, Oracle, MySQL, etc. Database 106 may store, for example, user account files, client terminal files, graphical menus, step results, workflow results, among others.

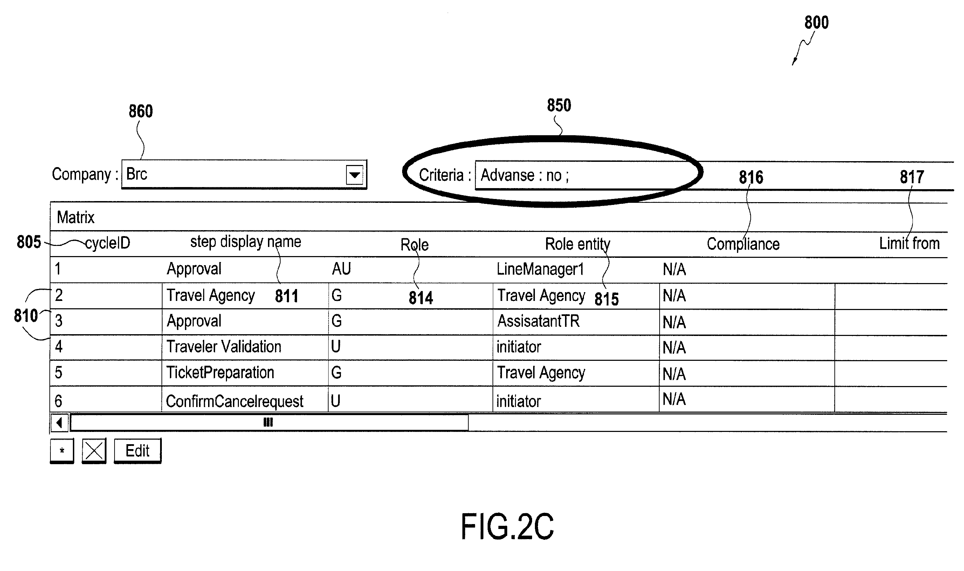

Database 106 may further include information related to flow variables that may be utilized for modifying workflow execution paths (to be discussed in greater detail below). An exemplary database matrix is shown at Figure 2C. While database 106 has generally been referred to in the singular, database 106 may comprise one or more databases. For example, a first database may comprise user information, a second database comprising workflow applications, a third database comprising workflow results, and a fourth database comprising a customization history for various workflow applications. One of skill in the art will recognize that such examples are not intended as limiting, and database 106 may be configured as desired.

Database 106 may also be configured to store documents and/or pointer information related to documents associated with a workflow process. For example, where purchase order approval has been requested by a user the user may upload a copy of the paper purchase order prepared in, for example, Microsoft Excel, to the system. Database 106 may then store the document (in this example the purchase order) and/or a link to the document storage location, for example where the document is stored in persistent memory (e.g. hard disk, RAID, etc.).

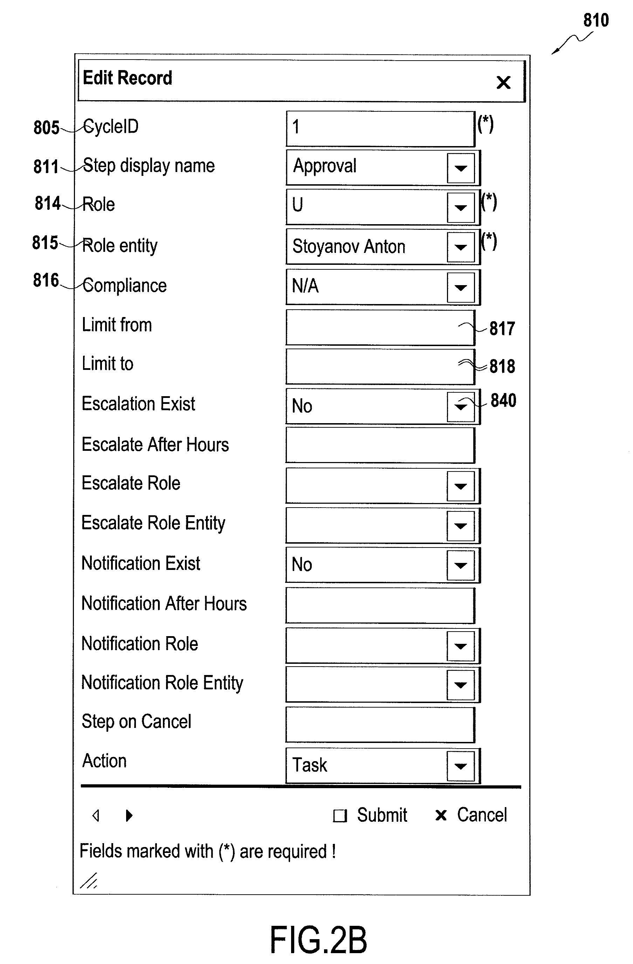

Figure 2B is an exemplary configuration screen highlighting an exemplary data structure associated with a customized workflow step 810 that may be stored in database 106. Importantly, Figure 2B will also be discussed in the context of workflow configuration. Each workflow application having an application ID is assigned to an entity having an entity ID (not shown). Based on such criteria, workflow applications among entities may be secured and kept separate.

In addition, workflow steps 810 may be configured and stored for each workflow application. One of ordinary skill in the art will understand that the presently described configuration is exemplary only, and that variations of this matrix 800 may be implemented in database 106 without departing from the scope of the present disclosure.

Step name 811 may display the name of the step 810 as one of skill in the art will understand. Role 814 and role entity 815 comprise a description of the user to whom the step shall be addressed either directly, e.g. a user, a group of users, or indirectly, e.g., an initiator, a line manager of the initiator, etc.

Each step 810 of matrix 800 may include various data columns related to evaluations for whether the step shall be executed or a subsequent step determined, e.g., rerouted to next step. These columns may include, for example, a compliance value (e.g., yes/no) 816, a limit *from* value 817, a limit to value 818, etc. As will be further described in greater detail below, where a defined variable falls in the limit range specified, then the task should be executed, otherwise the task should be skipped.

Each step 810 in matrix 800 may also comprise "step on cancel" information 820 indicating a subsequent step if the request is cancelled. Generally, where the request is approved, the subsequent step becomes the next step in the workflow process. However, this may not be the case, and where desired, a step on approval may also be provided.

Other aspects of the matrix 800 will be discussed in greater detail below.

Server 100 may also include storage devices configured to store various code modules comprising instructions, which when executed cause server 100 to perform functions consistent with embodiments of the present disclosure. Software modules may be developed for carrying out various tasks associated with the methods described herein. For example, such modules may include a receiving module 305, a retrieving module 310, a processing module 315, an output module 335, a GUI module 330, a generating module 345, a sending module 320, an encryption module 340, and a counter module 325, among others (e.g., a storage module for database interaction, a defining module for workflow creation, etc.).

The modules may be programmed/developed using object oriented and/or other development techniques, and using Java, C, C++, BASIC, and/or any suitable programming language. One of skill in the art will recognize that many programming languages exist and likely more will be developed in the future. Therefore, the scope of the present disclosure is not intended to be limiting to any one programming language mentioned herein.

Notably, the software modules described herein are intended as exemplary only, and may be fewer or greater as desired. Moreover, such software modules may be present on server 100, client device 199, a separate device, or any combination thereof.

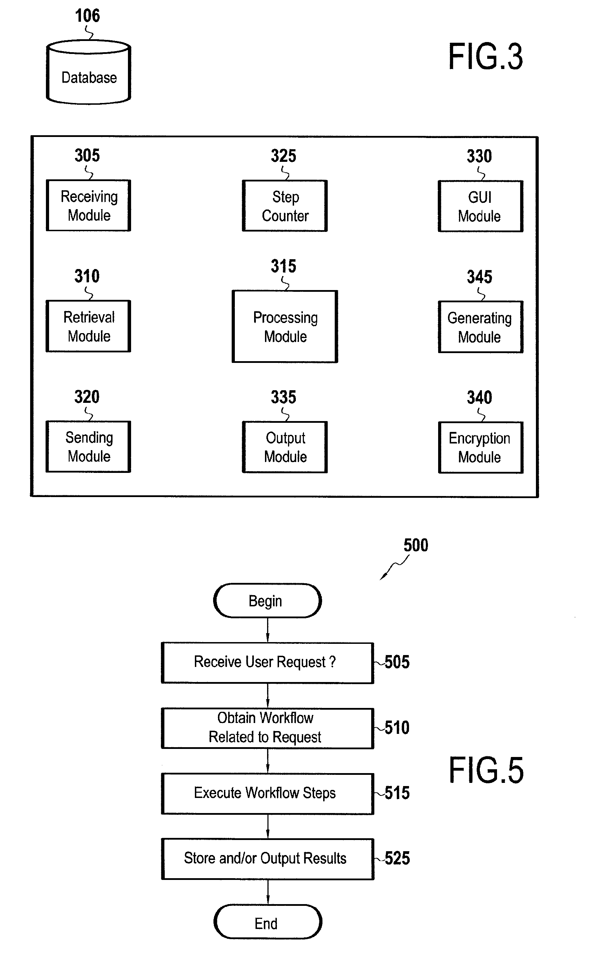

Figure 3 is an illustration of an exemplary logical architecture depicting software modules according to embodiments of the present disclosure. Exemplary functionality of these modules will be discussed below.

Receiving module 305 may be configured to receive information from a user, the information related to a workflow application and/or process. For example, receiving module 305 may receive a request from a user for workflow application information. Such a request may comprise at least an entity ID associated with the user and an application ID associated with the workflow application, among others.

Retrieval module 310 may be configured to obtain one or more steps related to the workflow process from database 106, based on the request, e.g., using the entity ID and the application ID database 106 may be searched and the workflow application identified. The one or more steps 810 may include at least a step count identifier 815 and step information associated with the step. Retrieval module 310 may also be configured to retrieve information related to workflow results, step results, user permissions, among other things.

Processing module 315 may be configured to execute workflow steps 810 as well as to perform a determination as to whether certain workflow steps 810 should be executed, and subsequent workflow steps 810 to be executed. In addition, processing module 315 may be configured to communicate with any module, e.g. receiving module 305, retrieval module 310, sending module 320, etc., to affect functionality of the presently described systems and methods. Further, processing module 315 may be configured to interface directly, or via another module (e.g., retrieval module 310), with database 106 to enable storage of step results, workflow results, step information, documents related to a user request, explanations associated with a user question, etc.

Sending module 320 may be implemented with, for example, SMTP functionality, among other protocol functionalities so as to enable the sending of notifications, e.g. emails, to a user's supervisor or next-in-line line manager, to notify such a person of a request for intervention. For example sending module 320 may receive information from processing module 315 and/or retrieval module 310 indicating that the next step in a workflow process requires intervention by the line manager of the user. In such a case sending module 320 may send a notification (e.g., e-mail, SMS, MMS, etc.) to the line manager with suitable identifying information (e.g., a hyperlink) such that the line manager may be enabled to act upon the intervention request (e.g. to approve or disapprove the request).

Counting module 325 may be configured to track the step identifier 805 currently executed within a workflow process, and may be further utilized for determining the next step 810 to be carried out in the workflow process. Step counter 325 may therefore include functionality related to incrementing, decrementing, and modification of the step identifier 805 in view of step information and flow variable modifications (to be described in greater detail below).

GUI module 330 and output module 335 may communicate with one another for purposes of providing the user interface for interacting within the workflow application. For example where line manager has received a request for intervention sent by sending module 320, GUI module 330 and output module 335 may receive information from receiving module 305 and/or processor 315 indicating the desire to generate a user input screen providing the opportunity for the line manager to approve, disapprove, or revert to the requester for further information regarding the intervention request. One of skill in the art will understand that GUI module 330 and output module 335 may communicate with one another and various other modules within the system in order to provide desired user interfaces for interacting with the system. For example, GUI module 330 and output module 335 may further provide a user interface customizing a workflow process, among others.

Encryption module 340 may provide a layer of security using a variety of data encryption techniques. One of ordinary skill in the art will recognize that because the methods of the present disclosure may be carried out in a distributed computer network environment, and may be enabled, optionally, via the cloud, security may be implemented as desired using any suitable technique (e.g., Advanced Encryption Standard (AES), Data Encryption Standard (DES), etc.) and security level (e.g., 128-bit, 40-bit, etc.) Encryption module 340 may therefore communicate with the other modules (e.g., receiving module 305, sending module 320, output module 335, etc.) to secure data transactions via the network.

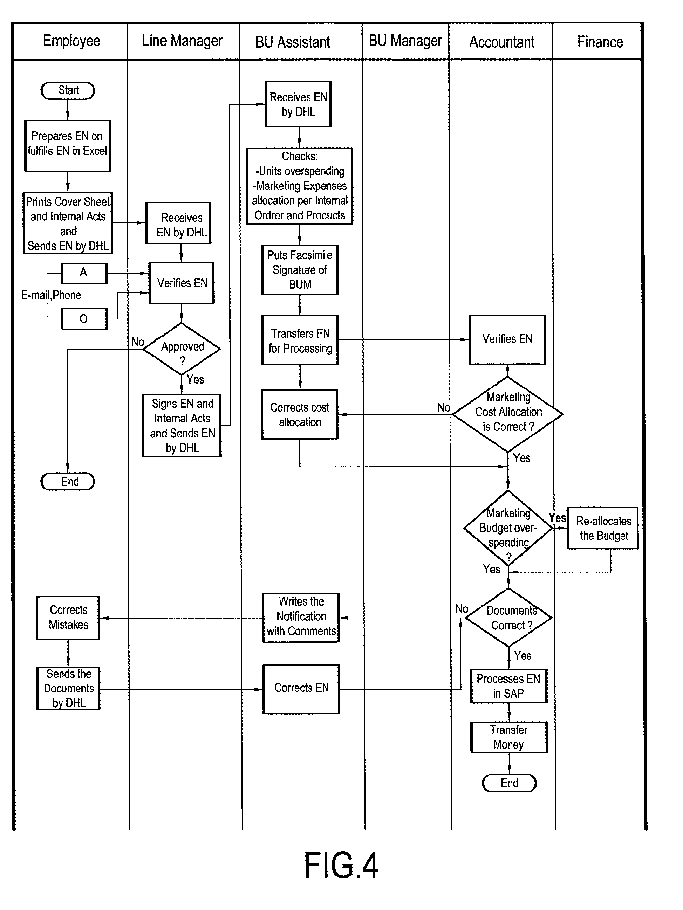

Figure 4 is a flowchart depicting an exemplary customized workflow process according to embodiments of the present disclosure. As shown in figure 4, a workflow process may comprise various steps, each step comprising, for example an interaction, a decision, and/or a request, among other things. The workflow diagram at figure 4 is broken into sections based on a user intended to perform or to intervene in the step represented within that user's column. For example in the exemplary workflow diagram, the employee may prepare a purchase order, for example, using Microsoft Excel. Such a step is therefore shown under the employee column. Similarly a line manager may be requested to approve the purchase order, in the workflow diagram such an intervention appears under the line manager column, and so on. This will be described in greater detail below with regard to the subsequent figures.

Figure 5 is a high level flow chart 500 depicting an exemplary method according to embodiments of the present disclosure. Regarding the description of this and subsequent flowcharts, the following example will be assumed. A user requires that a purchase order for $10,000 be approved through the appropriate channels for purposes of purchasing company letterhead. In order to obtain approval for such a purchase order, the user's line manager must review and approve the purchase order, the purchase order must then be sent to the accounting department for verification and approval, then to the finance department for budget allocation, and back to the employee as an approved purchase order.

Therefore, it is desirable to initially configure a customizable workflow to reflect the above-referenced steps, for example, by way of a defining module. Returning to Figure 2B, a user may manually enter data associated with each step of the workflow using a GUI provided by, for example, GUI module 330. Each step may include data previously described above, and a user may enter the associated data in order to customize each step of the workflow, as shown at Figure 2B. Following entry of data related to step, the data may be saved (e.g., by pressing "submit") and a new step created. One of skill in the art will recognize that this may be repeated as desired.

Alternatively, or in addition to, a user may already have a prepopulated file (e.g., comma delimited, excel, etc) containing data for loading into the workflow matrix stored in database 106. In such a case, an import function may be provided so as to enable importation of workflow step data directly into the matrix.

In addition, during setup it may be possible to configure various combinations of flow variables associated with the workflow process. Each combination of flow variables may then have a separate workflow branch having its set of branch steps. For example, a workflow having two flow variables, FV₁ and FV₂, each having two possible values, a or b, and C or D, respectively. Therefore, the possible value combinations are as follows in the exemplary table:

| FV₁ | FV₂ |
|---|---|
| a | C |
| a | D |
| b | C |
| b | D |

For each combination, otherwise known as a branch, a different set of steps may be created, such that the workflow, upon receiving a selection of such combination of variables, may branch accordingly. In other words, the combination FV₁ = a and FV₂ = C may have a first set of steps associated, while FV₁ = a and FV₂ = D may have a second set of steps associated, etc.

Once the customizable workflow process has been created, server 199 may first receive a request from a user related to workflow application (step 505). According to some embodiments, a user may be required to log into the system with credentials previously set up for the user, so as to identify the user within the networking framework (e.g., in a cloud). In addition, encryption module 340 may be utilized for interacting with information received from the user and provided by the system to encrypt and decrypt data as desired.

Once a request for a workflow application has been received, retrieval module 310 may obtain workflow information, e.g. one or more steps, related to the request based on the entity ID and application ID (step 510). For example retrieval module 310 may interface with database 106 to retrieve a step count and step information, among others.

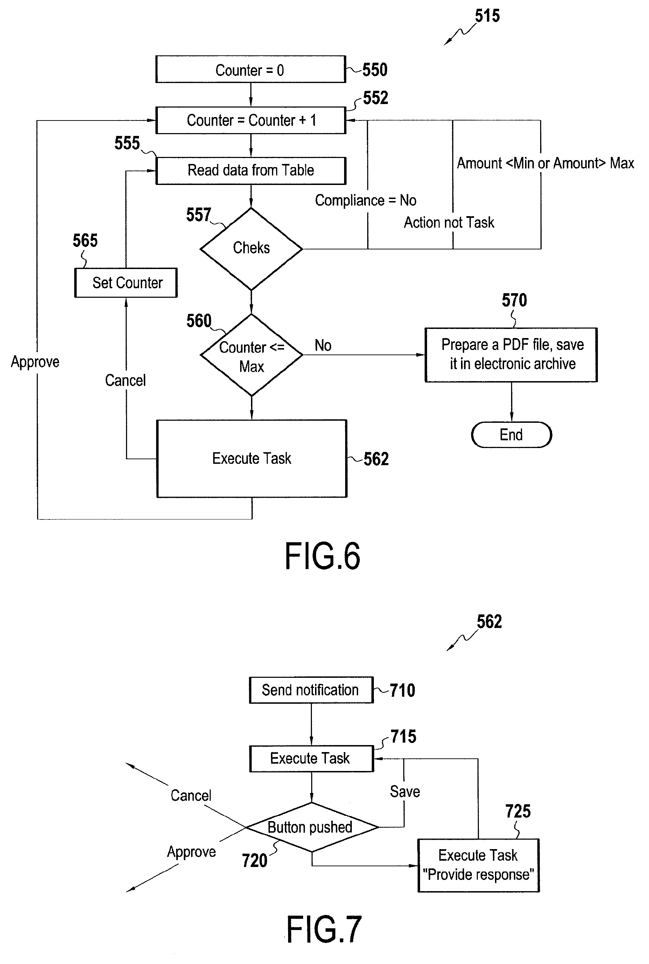

Once workflow information has been retrieved, the one or more steps of the workflow process may be executed (step 515). Figure 6 is a lower level representation of the execution step 515 of the flow chart depicted at Figure 5.

In order to begin execution of the workflow steps 810, step counter 325 may be initialized to zero, step zero (0) defaulting to the step of request creation (step 550). Step zero may be predefined so as to correspond to a request creation step, therefore, step zero may be configured so as to lack certain information associated with other steps, as has been described above.

Following creation of a request at step 0, step counter may then be incremented by 1 so as to continue to a subsequent step 810 associated with the workflow (steps 552). By incrementing the counter in this way, the step ID of the first workflow step to be executed may be obtained from the data associated with the step read from the matrix in database 106 (step 555). This step may comprise data associated with the step, e.g., a step name 811, a role 814, a role entity 815, limit information 817 and 818, execution information, compliance information 816, task type information, etc. For example, a step may comprise a step name of "approval," having a role of "group," and a role entity of "supervisor," and a task type of "approval." In such a case, a notification may be sent to a group of supervisors (e.g., being linked via a linking table stored in database 106), all having authority over the requesting user's actions. Any one of these supervisors of the group may therefore approve, deny, and/or request further information related to the user's created request. One of skill in the art will understand that certain variations may be implemented without departing from the scope of the present disclosure.

Following the retrieval of step data from the matrix, various evaluations may be performed to determine whether the step, as retrieved, should be executed (step 557). Such evaluations may include, for example, rule compliance evaluations, action evaluations, limit evaluations, and permissions evaluations. For example, in the case where a user is in the process of requesting approval for the $10,000 purchase order, the evaluations may include determining whether such a user has permission to create such a request, whether the value of the purchase order is within the user's limits, whether the action being undertaken is indeed a task, and/or whether the timing for creation of such a request is correct (e.g., end of month, end of year, etc).

In the event that a compliance rule is not met, for example, the user has not properly submitted a paper copy of the purchase order intended for approval, and/or is not properly filled out the request, the processing module 315 may determine a subsequent step 810' for execution. In some instances such a subsequent step 810' may involve incrementing of the counter 325 and retrieval of additional step information from database 106. Alternatively, for example, where the user has not properly complied with the business rules of a request, processing module 315 may set counter 325 to an appropriate subsequent step based on the failure to satisfy the business rules. For example, such a failure may result in automatic cancellation of the request, without notification to a subsequent user.

In yet another example of an evaluation to be performed, certain users may have varying rights with regard to their abilities to approve or create certain requests. For example a manager may be permitted to approve or create a purchase order a value less than or equal to $10,000, while a vice president may be permitted to approve or create a purchase order of value less than or equal to $100,000. Each type of user, having such data associated with their user account in database 106, may be evaluated during this evaluation step 557. In the present example, if the user attempting to create the purchase order for $10,000 is not authorized to create such a purchase order because the value is too high, the system may maintain the counter at 1, and restart the step to enable the user to create an appropriately valued purchase order.

Likewise, in certain instances a manager may not wish to be troubled with purchase orders having a value less than a certain amount, for example $500. Where purchase order having a value of $250 has been submitted to such a manager, the evaluations undertaken at step 557 may determine that manager approval is not required, and the counter 325 is therefore incremented and new data read from the matrix (step 552).

One of skill in the art will understand that various such evaluations may be carried out without departing from the scope of the present disclosure. Any such evaluations are intended to fall within the scope of the present claims.

Once the evaluations have been satisfied (step 557: OK), processing module 315 may determine whether the current step 810 is the final step (i.e. the counter 325 has reached the maximum step ID associated with the workflow application) (step 560). When it is determined that the workflow process has reached the maximum step ID (step 560: no), generating module 345 may generate results of the workflow based on the previously executed steps in the step results (step 570). Such results may be stored for example in a file (e.g. PDF, doc, XLS, XML, etc.), in database 106, and/or any other suitable location.

Where it is determined that the counter 325 has not reached the end of the workflow process (step 560: yes), the current step 810 for which data was retrieved from the matrix stored in database 106, may be executed (step 562). Figure 7 is a low level representation of the execute task step 562 of the flow chart depicted at Figure 6.

Upon executing the task, processing module 315 may determine whether a notification should be sent to another user based on the step information (Step 710). For example, where a user is in the process of creating a request for approval of a purchase order processing module 315 may determine that no such notification should be sent at that time. Alternatively, following creation of the request for approval of the purchase order, processing module 315 may increment the counter 325, as previously noted, moving on to the next step in performing the evaluations (step 557) as described to determine that the users manager should be requested to approve the purchase order prior to the next step 810. Therefore, processing module 315 may then cause to be sent via sending module 320 a notification to the user's line manager, or associated supervisor noted in the matrix in the role entity 815, or other suitable data position. Processing module 315 may accomplish the sending via sending module 320 in conjunction with generating module 345, and/or any other suitable module associated with the system.

The notification may be of any suitable type, e.g., email, SMS, MMS, etc., and may include a hyperlink, or other suitable pointer information such that the intervening user may be able to access the request within the workflow system for purposes of performing the requested intervention.

Following the sending of the notification, the receiver(s) of the notification may execute the task associated with the notification (step 715).

For example, upon accessing the step (in the current example, the request) the manager may be presented with the details of request output via for example GUI module 330 and output module 335 generating module 345 and/or encryption module 340, following communication with retrieval module 310 so as to provide sufficient information to the manager for making a decision regard to the request. For example, the manager may be permitted to download and view a copy of the paper purchase order originally prepared by the user, details and comments submitted by the user, etc.

The manager may then determine whether to approve the request, cancel the request, or return the request to the user requesting additional information (step 720). For example the manager may determine that there is insufficient information for determining whether to approve or disapprove of the purchase order, and therefore requests additional information from the user. Processing module 315 may then execute a provide response task (step 725) in which the request is returned to the user with a question, for example additional information request), thereby enabling the user to re-access the previously generated request and respond to the managers inquiry (step 725). The system may then return the request to the manager for reevaluation in view of the user's response.

Where the manager determines that the purchase order is appropriate and that the purchase order should be approved, the manager may take the appropriate action (e.g. pushes a button labeled approve) (step 720: approve). Following such an action, control is returned flowchart 515, step 565 were the appropriate subsequent step 810' is determined by processing module 315, and the counter incremented to appropriately reflect the subsequent step (step 552).

In addition, following the managers approval, the results of the step 810 may be stored, e.g. in database 106, in a file, and/or by any other suitable method for purposes of outputting this results information to subsequent viewers of the request and/or for generation of supporting documents, e.g. a report, an approved purchase order, etc.

Alternatively, where the manager determines that the purchase order should not be approved, the manager may press cancel (step 720: cancel) where again control returns to the flow chart 515, processing module 315 determines the appropriate step in view of the step information and the canceled request, and the counter set accordingly (step 565). For example, a step may exist including a notification sent to the user indicating cancellation of the request. Therefore processing module 315 may cause the counter to be set to the step identifier associated with cancellation step including the notification to the creating user. In addition, each step 810 may include, as noted above, "step on cancel" information indicating the step ID of the subsequent step 810' to be executed following a cancellation.

Moreover, following cancellation of the request, these results may also be stored, e.g. in database 106, and a file, etc. for viewing by subsequent users and/or for generation of supporting documents.

Importantly, because some workflows are not linear the systems and methods of the present disclosure provide the ability to evaluate one or more flow variables stored in the matrix and to modify the determination of the subsequent step based on this evaluation.

For example, as noted above, two flow variables FV₁ and FV₂ may be provided each having two possible values, a or b, and C or D, respectively. Upon obtaining a value for each of these flow variables (e.g., at the outset of workflow execution and/or during execution) the workflow may "branch" to the workflow steps associated with the combination of steps previously configured for variables having the specified values, e.g., FV₁ = a and FV₂ = C.

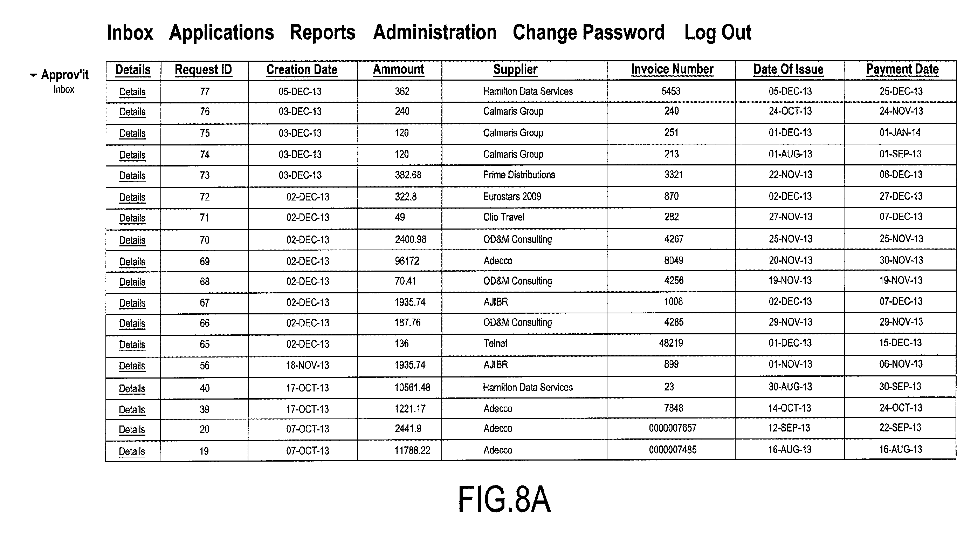

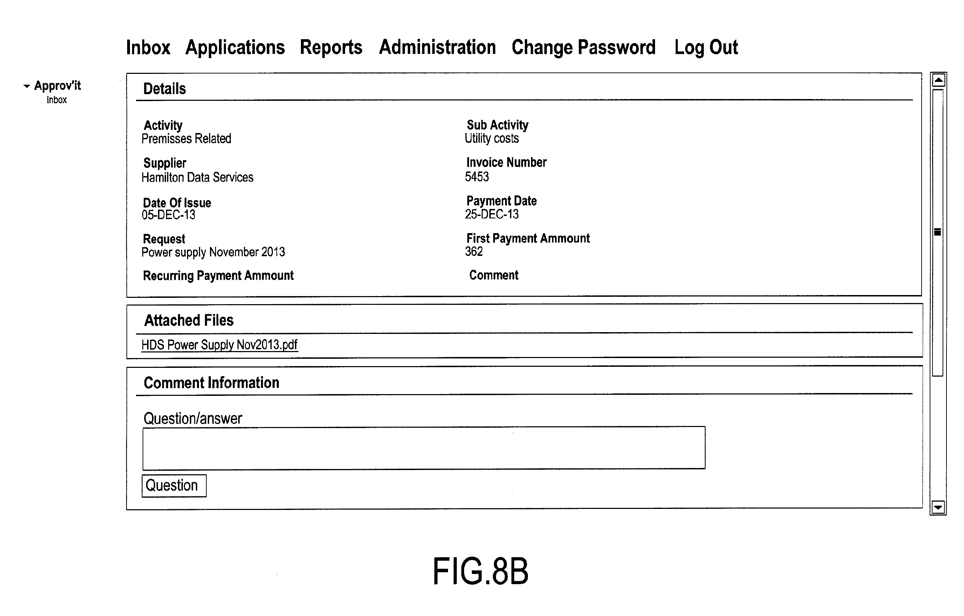

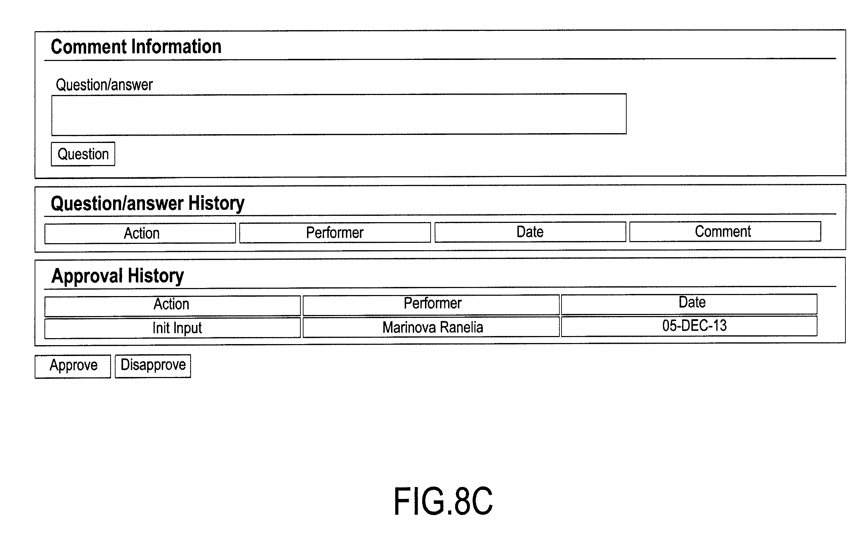

Figure 8A is an illustration of an exemplary user interface (GUI) for providing a list of current workflow requests outstanding for a user, while Figures 8B and 8C are an exemplary step detail GUI related to workflow task execution (Figure 7, step 715), according to embodiments of the present disclosure.

Importantly, certain other aspects may be helpful in the context of the current disclosure. For example, the step information may include a maximum response time before a reminder is issued and/or a reminder frequency associated with the step. For example, where the manager was notified of the presence of the request related to the purchase order but has not responded to the request for a period of, e.g. seven days, processing module 315 in combination with sending module 320 may generate a reminder and send that reminder to the manager to attempt to obtain a response. Likewise, following such a delay, a reminder frequency may indicate that such a reminder should be sent periodically thereafter, for example every other day. One of skill in the art will recognize that such configurations may be modified without departing from the scope of the present disclosure.

In addition, escalation 840 may be provided to enable a workflow to send notifications and request review in urgent situations. For example, a process step may indicate that escalation is necessary where a deadline is close. The customized workflow process may enable indication of a party to whom the request should be escalated and whether such escalation should be performed after hours, for example.

One of skill in the art will recognize that various other modifications may be made to the disclosed system and methods. Any such modifications are intended to fall within the scope of the present disclosure.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Where any standards of national, international, or other standards body are referenced (e.g., ISO, etc.), such references are intended to refer to the standard as defined by the national or international standards body as of the priority date of the present specification. Any subsequent substantive changes to such standards are not intended to modify the scope and/or definitions of the present disclosure and/or claims.

It is intended that the specification and examples be considered as exemplary only, with a true scope of the disclosure being indicated by the following claims.

## Claims

1. A method for providing a customizable workflow process, the method **characterized by** comprising:
receiving, via a network, a request from a user, wherein the request comprises at least an entity ID associated with the user and an application ID associated with the workflow process;
obtaining, by a processor, a step related to the workflow process from a database, based on the request, wherein the step comprises at least a step count identifier and step information;
executing, by the processor, the step based on the step information to generate step results;
determining, by the processor, based on the step results and an incremental step counter, a subsequent step to be executed in the workflow process; and
storing, by the processor, the results of the workflow process.

2. The method according to claim 1, wherein the step further comprises execution information and wherein the execution information indicates whether or not the step should be executed.

3. The method according to claim 2, further comprising determining an alternative subsequent step based on the incremental step counter and the step information when the execution information indicates that the step is not to be executed.

4. The method according to any of the preceding claims, wherein the executing includes notifying a second user that the second user's intervention is requested.

5. The method according to any of the preceding claims, further comprising:
generating a document detailing the results of the workflow process; and
outputting the document in human readable format.

6. The method according to any of the preceding claims, further comprising:
defining the workflow process, wherein the defining comprises:
creating a step comprising step information;
incrementing the incremental step counter associated with the workflow process; and
storing the step counter and the step including the step information in the database, wherein the step is selected from one of a notification, a decision request, an information request, and a document request, and wherein the step information optionally comprises at least one of an affected user, a deadline, a reminder frequency, a reminder delay, and exit instructions.

7. The method according to any of the preceding claims, further comprising:
evaluating one or more flow variables stored in the database; and
modifying the determination of the subsequent step based on the evaluation, the modifying optionally comprising branching to a predefined sub-stream of the workflow process.

8. The method according to any of the preceding claims, further comprising incrementing the incremental step counter after execution of each step of the workflow process and/or modifying the incremental step counter based on the step results.

9. A computer system for providing a customizable workflow process, the computer system **characterized by** comprising:
a receiving module (305) configured to receive a request for workflow information via a network, wherein the request comprises at least an entity ID associated with the user and an application ID associated with the workflow process;
a retrieval module (310) configured to obtain a step related to the workflow process from a database (106), based on the request, wherein the step comprises at least a step count identifier and step information;
a processing module (315) configured to execute the step based on the step information;
an incremental step counter (325) configured to track a position in the workflow process corresponding to the step count identifier; and
a generating module (345) configured to receive information from the processing module and to generate and store the step results, wherein
the processing module (315) is further configured to determine a subsequent step to be executed in the workflow process based on the step results and wherein
the generating module (345) is further configured to generate workflow process results based on a plurality of step results.

10. The computer system according to claim 9, wherein the processing module (315) is further configured to determine, based on the execution information, whether or not the step should be executed, and wherein the processing module (315) is optionally configured to determine an alternative subsequent step when the step is not to be executed based on the incremental step counter and the step information.

11. The computer system according to any of claims 9-10, wherein the executing includes notifying a second user that the second user's intervention is requested.

12. The computer system according to any of claims 9-11, wherein the generating module (345) is further configured to generate a document detailing the results of the workflow process and output the document in human readable format.

13. The computer system according to any of claims 9-12, further comprising:
a defining module configured for creating a step comprising step information, incrementing a step counter associated with the work flow process; and passing information to a storage module to enable storing the step counter and the step including the step information in the database wherein the step is selected from one of a notification, a decision request, an information request, a change request, and a document request and optionally comprises at least one of an affected user, a deadline, a reminder frequency, and exit instructions.

14. The computer system according to any of claims 9-13, wherein the processing module is further configured to evaluate one or more flow variables stored in the database, and to modify the determination of the subsequent step based on the evaluation, wherein the modification optionally comprises following a predefined sub-stream of the workflow process.

15. A computer readable medium containing instructions that when executed by a processor cause the processor to perform the method according to any of claims 1-8.
